(19) **Europäisches Patentamt**

**European Patent Office**

**Office européen des brevets**

(11) **EP 1 672 624 A2**

(12) **EUROPEAN PATENT APPLICATION**

(43) Date of publication:
   **21.06.2006 Bulletin 2006/25**

(51) Int Cl.:
   **G11B 7/08** *(2006.01)*   **G11B 7/085** *(2006.01)*

(21) Application number: **05257298.9**

(22) Date of filing: **28.11.2005**

(84) Designated Contracting States:
   **AT BE BG CH CY CZ DE DK EE ES FI FR GB GR HU IE IS IT LI LT LU LV MC NL PL PT RO SE SI SK TR**
   Designated Extension States:
   **AL BA HR MK YU**

(30) Priority: **10.12.2004 JP 2004358942**

(71) Applicant: **SONY CORPORATION**
   **Tokyo 141 (JP)**

(72) Inventor: **Takahashi, Tatsuyuki,**
   **Sony Corporation**
   **Tokyo 141 (JP)**

(74) Representative: **Horner, David Richard et al**
   **D Young & Co**
   **120 Holborn**
   **London EC1N 2DY (GB)**

(54) **Disc drive apparatus and electronic device**

(57)    A disc drive apparatus is composed of a table rotating means (56) for rotating a turntable on which a disc-like recording medium is detachably mounted, a chassis (37) to which the table rotating means is attached, an optical pickup device for recording and/or reproducing an information signal on and/or from the disc-like recording medium rotated by the table rotating means, an optical pickup moving means including two guide members (66,67) for guiding the optical pickup device in the radius direction of the disc-like recording medium and moving the optical pickup device along the two guide members and a supporting means (72) for supporting at least one guide member of the two guide members to the chassis or a chassis side member, wherein the supporting means includes an elastic member (77) for spring-biasing the one guide member (66) at least at one end of the longitudinal direction of the one guide member in the direction crossing its shaft direction and an adjustment screw (78) located so as to oppose the elastic member so that it may be screwed to the chassis or the chassis side member and the adjustment screw having a tapered portion (80) contacting with an outer peripheral surface of the one guide member so as to stop movement of the one guide member spring-biased by the elastic member.

**FIG. 6**

EP 1 672 624 A2

*FIG. 17A*

*FIG. 17B*

*FIG. 17C*

**Description**

BACKGROUND OF THE INVENTION

The present invention relates to a disc drive apparatus including an optical pickup device for recording and/or reproducing an information signal on and/or from a disc-like recording medium which is detachably attached to the disc drive apparatus and an electronic device including such disc drive apparatus, and particularly to a disc drive apparatus in which at least one guide member of two guide members of an optical pickup moving means for guiding movement of the optical pickup device can be moved and adjusted in the direction substantially parallel to the plane direction of the disc-like recording medium and an electronic device.

Cited Patent Reference 1 (Official Gazette of Japanese laid-open patent application No. 2001-176086), for example, has described so far this kind of disc drive apparatus. The Cited Patent Reference 1 has described a disc reproducing apparatus in which an angle of inclination of an optical axis of an objective lens and the position of a movement locus of the optical axis of the objective lens can be adjusted. The disc reproducing apparatus described in the Cited Patent Reference 1 is composed of a first holder fixed to a chassis and which is used to hold a drive motor to which a turntable with a disc held thereon is pivotally supported, a first inclination adjusting means for adjusting an inclination of the first direction of the turntable pivotally supported by the drive motor held by the first holder relative to the chassis, a second inclination adjusting means for adjusting an inclination of the turntable in the second direction having a predetermined relationship between it and the first direction, a second holder fixed to the chassis to support the optical pickup so that the optical pickup can be moved freely and a third inclination adjusting means for adjusting an inclination of the optical pickup supported to the second holder along the plane on the chassis.

According to the disc reproducing apparatus having the above-mentioned arrangement, there can be expected effects in which an angle of inclination of an optical axis of an objective lens and the position of a movement locus of the optical axis of the objective lens can be adjusted with ease.

However, in the case of the disc reproducing apparatus according to the Cited Patent Reference 1, a "so-called R dependence" generated by a displacement between the extended line of the movement locus of the optical axis of the objective lens and the center of rotation of the turntable is adjusted by the whole of a sled mechanism. This "R dependence" will be described more in detail later on. Specifically, while the turntable is supported to a chassis through a bracket, an optical pickup having an objective lens is supported to the chassis through suitable means such as two rods so that it can be moved. Further, the holder includes a rack gear portion and it is provided with an adjustment jig gear which is meshed with the rack gear portion. This adjustment jig gear is rotated to rotate the holder along the plane on the chassis, whereby the R dependence can be canceled by adjusting the position of the movement locus of the optical axis of the objective lens.

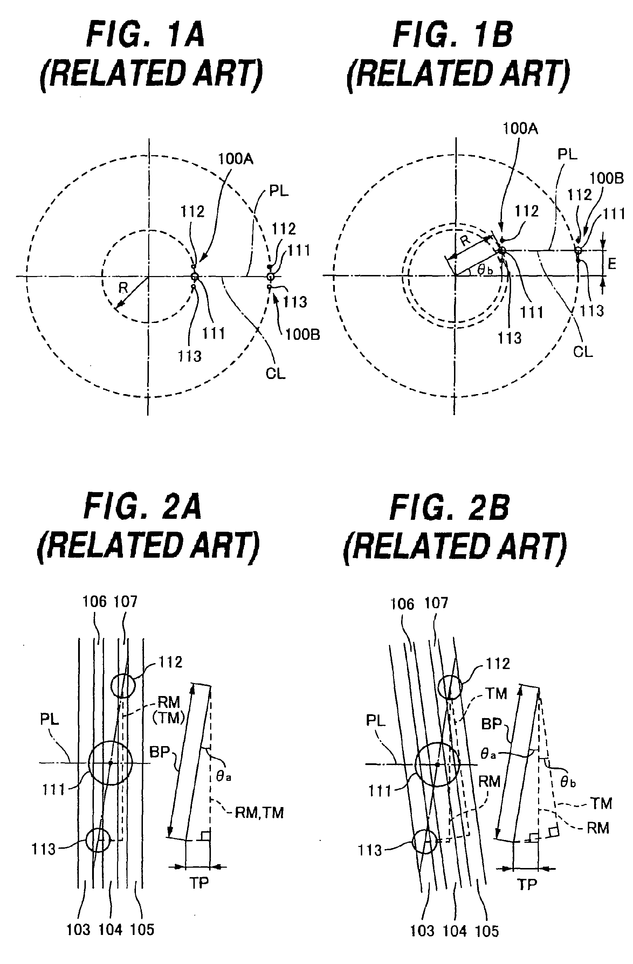

In general, it is known that, when laser light emitted from the objective lens of the optical pickup traces the information recording surface of the optical disc, if the extended line of the movement locus of the optical pickup lies on the line which passes the center of rotation of the optical disc, then best characteristics can be obtained and that the R dependence is deteriorated and characteristics are deteriorated as the position is being displaced from the line. These relationships will be described with reference to FIGS. 1A and 1B and FIGS. 2A and 2B.

FIG. 1A of the accompanying drawings shows the state in which a movement locus PL of the optical pickup which traces the information recording surface of the optical disc is coincident with a line CL passing the center of rotation of the optical disc. This line CL will hereinafter be referred to as a "disc central line". In FIG. 1A, reference numeral 100A denotes the state in which the optical pickup is located at the innermost periphery of the information recording area of the optical disc. Also, reference numeral 100B denotes the state in which the optical pickup is located at the outermost periphery of the information recording area of the optical disc. FIG. 2A is a diagram showing positional relationship among data tracks (grooves), lands and three beam spots at these innermost and outermost peripheral positions in an enlarged-scale.

In FIG. 2A, reference numeral 103 denotes a n-1th data track from the inside of the radius direction of the optical disc. Reference numeral 104 denotes a n-th data track from the inside of the radius direction of the optical disc and reference numeral 105 denotes a n+1th data track from the inside of the radius direction of the optical disc. Also, reference numeral 106 denotes a n-th land from the inside of the radius direction of the optical disc and reference numeral 107 denotes a n+1th land from the inside of the radius direction of the optical disc. Further, reference numeral 111 denotes a main beam spot of three beam spots outputted from an optical pickup 100, reference numeral 112 denotes a side beam spot of the front side of the track running direction and reference numeral 113 denotes a side beam spot of the back side of the track running direction. In this case, n is an arbitrary integer.

Beam spots of the general optical pickup are three beam spots. A focusing error signal is detected by a large main beam spot located between the two side beam spots and a tracking error signal is detected by the two side beam spots located at both sides of the large main beam spot. The two side beam spots are located between data and data across one track (track pitch TP) of a data track which is a data area. In this state, the two side beam spots have a phase difference of 180° therebetween.

As shown in FIG. 2A, the main beam spot 111 of the optical pickup 100 is located at substantially the central portion of the n-th data track 104, the front side beam spot 112 is located at substantially the central portion of the n+1th land 107 and the back side beam spot 113 is located at substantially the central portion of the n-th land 106. In this state, a relative movement direction RM which makes a right angle with the movement locus PL of the optical pickup 100 is substantially coincident with a direction TM in which data tracks (or lands) are extended. The centers of the two side beams 112 and 113 are connected by a straight line and a length of this straight line will hereinafter be referred to as a "side beam pitch BP". Also, an angle θa formed by the side beam pitch BP and the relative movement direction RM will hereinafter be referred to as a "beam skew angle".

On the other hand, FIG. 1B shows the state in which the movement locus PL (three beam spots) of the optical pickup 100 which traces the information recording surface of the optical disc is displaced from the disc central line CL by a displacement amount E. In FIG. 1B, reference numerals are similar to those of FIG. 1A. In FIGS. 1A and 1B, reference letter R denotes a radius in the innermost periphery of the information recording area. Also, FIG. 2B is a diagram showing main portions of FIG. 1B in an enlarged-scale and shows positional relationships among data tracks (grooves), lands and three beam spots in the innermost and outermost peripheral positions of the information recording area in an enlarged-scale.

As shown in FIG. 2B, when the trace formed on the information recording surface of the optical disc by the optical pickup 100 is displaced from the disc central line CL of the optical disc, a displacement angle θb is generated. This displacement angle θb is an angle formed between the relative movement direction RM of the optical pickup 100 and the direction TM in which data tracks are extended and this displacement angle θb will hereinafter be referred to as a "beam displacement angle". A phase difference based on this beam displacement angle θb, that is, a phase difference relative to a phase difference of 180° between two side spots is called a "R dependence".

$$R \text{ dependence} = (\theta b / \theta a) \times 180 \, [°]$$

This R dependence is caused by positional accuracy between a main guide shaft for guiding the optical pickup 100 and a rotary shaft of a spindle motor, and tracking efficiency of the optical pickup 100 is deteriorated as the R dependence is increased. In order to improve the tracking efficiency, various factors such as dimensional accuracy between fixed standard of the spindle motor fixed to the chassis (or chassis side member) and fixed standard of the main guide shaft and vertical accuracy of the spindle shaft should be controlled strictly. However, as signal processing becomes higher in double-speed and recording density is increased much more in recent years, it becomes difficult to obtain high tracking efficiency by only control of the above-described dimensional accuracy, which as a result causes disadvantages such as deterioration of yield.

In order to remove the above-described disadvantages, according to the disc reproducing apparatus of the Cited Patent Reference 1, the R dependence can be adjusted and canceled by rotating the adjustment jig gear, whereafter a holder is fixed to the chassis by fixed screws to thereby prevent the R dependence from being changed. Accordingly, when the R dependence is adjusted, works of two steps such as rotation adjustment work using the adjustment jig gear and fixing work using the fixed screws are required. Therefore, not only adjustment work becomes complicated but also there are a lot of available assemblies, which is uneconomical.

SUMMARY OF THE INVENTION

Embodiments of the present invention provide a disc drive apparatus in which adjustment work of R dependence can be made easy and which can be formed of lesser assemblies.

Further, embodiments of the present invention provide an electronic device including the above disc drive apparatus.

According to an aspect of the present invention, there is provided a disc drive apparatus which is comprised of a table rotating means for rotating a turntable on which a disc-like recording medium is detachably mounted, a chassis to which the table rotating means is attached, an optical pickup device for recording and/or reproducing an information signal on and/or from the disc-like recording medium rotated by the table rotating means, an optical pickup moving means including two guide members for guiding the optical pickup device in the radius direction of the disc-like recording medium and moving the optical pickup device along the two guide members and a supporting means for supporting at least one guide member of the two guide members to the chassis or a chassis side member, wherein the supporting means includes an elastic member for spring-biasing the one guide member at least at one end of the longitudinal direction of the one guide member in the direction crossing its shaft direction and an adjustment screw located so as to oppose the elastic member so that it may be screwed to the chassis or the chassis side member and the adjustment screw having a tapered portion contacting with an outer peripheral surface of the one guide member so as to stop movement of the one guide member spring-biased by the elastic member.

In the disc drive apparatus according to an embodiment of the present invention, the adjustment screw is a countersunk small screw or a flat head bolt with a head having an inverse conical tapered portion.

In the disc drive apparatus according to an embodiment of the present invention, the adjustment screw is a screw or a bolt in which a ring having an inverse conical tapered portion is attached to a shaft portion.

In the disc drive apparatus according to an embodiment of the present invention, the elastic member is formed of a coil spring, a leaf spring, a volute spring or a rubber-like elastic material of which one end is supported to the chassis or the chassis side member.

In the disc drive apparatus according to an embodiment of the present invention, the supporting means is provided at the one guide member at its respective ends in the longitudinal direction.

In accordance with another aspect of the present invention, there is provided an electronic device including a disc drive apparatus for rotating a disc-like recording medium and recording and/or reproducing an information signal on and/or from the disc-like recording medium, the disc drive apparatus is comprised of a table rotating means for rotating a turntable on which a disc-like recording medium is detachably mounted, a chassis to which the table rotating means is attached, an optical pickup device for recording and/or reproducing an information signal on and/or from the disc-like recording medium rotated by the table rotating means, an optical pickup moving means including two guide members for guiding the optical pickup device in the radius direction of the disc-like recording medium and moving the optical pickup device along the two guide members and a supporting means for supporting at least one guide member of the two guide members to the chassis or a chassis side member, wherein the supporting means includes an elastic member for spring-biasing the one guide member at least at one end of the longitudinal direction of the one guide member in the direction crossing its shaft direction and an adjustment screw located so as to oppose the elastic member so that it may be screwed to the chassis or the chassis side member and the adjustment screw having a tapered portion contacting with an outer peripheral surface of the one guide member so as to stop movement of the one guide member spring-biased by the elastic member.

In the electronic device according to an embodiment of the present invention, the adjustment screw is a countersunk small screw or a flat head bolt with a head having an inverse conical tapered portion.

In the electronic device according to an embodiment of the present invention, the adjustment screw is a screw or a bolt in which a ring having an inverse conical tapered portion is attached to a shaft portion.

Further, in the electronic device according to an embodiment of the present invention, the elastic member is formed of a coil spring, a leaf spring, a volute spring or a rubber-like elastic material of which one end is supported to the chassis or the chassis side member.

Furthermore, in the electronic device according to an embodiment of the present invention, the supporting means is provided at the one guide member at its respective ends in the longitudinal direction.

According to the disc drive apparatus of an embodiment of the present invention, the disc-like recording medium mounted on the turntable is rotated by the table rotating means and the optical pickup device is moved in the radius direction of the disc-like recording medium by the optical pickup moving means. When the optical pickup device is being moved in the radius direction of the disc-like recording medium by the optical pickup moving means, the information signal is recorded on or reproduced from the disc-like recording medium by the optical pickup device. At that time, if the optical pickup which traces the information recording surface of the disc-like recording medium is displaced from the disc central line, then tracking efficiency will be deteriorated and hence the optical pickup should be adjusted so as to remove such displacement. In this case, the height of the head is changed by turning the adjustment screw of the supporting means which supports at least one guide member of the two guide members to the chassis or the chassis side member, whereby the axial direction (attachment attitude) of one guide member spring-biased with the elastic member is changed to remove the R dependence.

As a result, since the optical pickup device can be adjusted such that the optical pickup may trace the disc central line regardless of attachment accuracy of the chassis, the spindle motor and the like, deterioration of tracking efficiency can be suppressed to the minimum and performance of the disc drive apparatus can be improved for recording and reproduction. Also, the adjustment screw of the main guide shaft which is one guide member serves as a member for fixing the main guide shaft to the chassis as well. In consequence, work of two steps of the rotation adjustment work done by the adjustment jig in the adjustment work of the R dependence, which has been enumerated as the problem encountered with the related art, and the fixing work using the fixed screws can be replaced with work of one step and hence adjustment and fixing can be completed. Thus, it becomes possible to decrease the number of manufacturing processes and the number of assemblies.

According to the disc drive apparatus of an embodiment of the present invention, since screw assemblies generally available on the market, such as small countersink screws and flat head bolts of flat fillister head screws and oval countersunk screws can be used as adjustment screws and screws of special shapes and structures need not be manufactured, a manufacturing cost of the disc drive apparatus can be prevented from being increased and hence it is possible to realize the supporting means, which can change the axial direction of the guide member, by an extremely simple arrangement.

According to the disc drive apparatus of an embodiment of the present invention, since the adjustment screw can be constructed by the simple arrangement of the screw, which is widely used, and the tapered ring, it is possible to realize the supporting means, which can change the axial direction of the guide member, by the simple arrangement without increasing the manufacturing cost so much.

According to the disc drive apparatus of an embodiment of the present invention, since the coil spring, the leaf spring, the volute spring or the rubber-like elastic material, which are widely used, can be used as the elastic member and accordingly any special elastic member need not be used, it is possible to inexpensively manufacture the supporting means, which can change the axial direction of the guide member, by the simple arrangement without increasing the manufacturing cost so much.

Further, according to the disc drive apparatus of an embodiment of the present invention, since one guide member is supported by the supporting means such that both ends thereof in the longitudinal direction may be adjusted, the guide member can be adjusted at its both ends of the axial direction and it is possible to realize the supporting means of which angle can be fine adjusted by the simple arrangement.

Furthermore, according to the electronic device of an embodiment of the present invention, the axial direction of at least one guide member of the two guide members supported to the chassis or the chassis side member of the disc drive apparatus by the supporting means can be varied by turning the adjustment screw of the supporting means to change the height of the head of the adjustment screw, whereby the axial direction of the guide member spring-biased by the elastic member can be changed to remove the R dependence. As a result, it is possible to provide the electronic device in which adjustment work by which the optical pickup can trace the disc central line can be carried out with ease regardless of positional accuracy of suitable components such as the chassis and the spindle motor, deterioration of tracking efficiency can be suppressed to the minimum and which can be improved in performance for recording and reproduction.

Further particular and preferred aspects of the present invention are set out in the accompanying independent and dependent claims. Features of the dependent claims may be combined with features of the independent claims as appropriate, and in combinations other than those explicitly set out in the claims.

BRIEF DESCRIPTION OF THE DRAWINGS

The present invention will be described further, by way of example only, with reference to preferred embodiments thereof as illustrated in the accompanying drawings, in which:

FIGS. 1A and 1B are respectively schematic diagrams showing a relationship between a movement locus of an optical pickup of a disc drive apparatus and a central line of a disc; wherein FIG. 1A is a schematic diagram to which reference will be made in explaining the state in which a movement locus of the optical pickup is coincident with the central line of the disc; and FIG. 1B are a schematic diagram to which reference will be made in explaining the state in which a movement locus of the optical pickup is parallel to the central line of the disc;

FIGS. 2A and 2B are respectively schematic diagrams showing main portions of FIGS. 1A and 1B; wherein FIG. 2A is an explanatory diagram showing the main portion of FIG. 1A in an enlarged-scale; and FIG. 2B is an explanatory diagram showing the main portion of FIG. 1B in an enlarged-scale;

FIG. 3 is a perspective view showing a disc drive apparatus according to an embodiment of the present invention from the front side;

FIG. 4 is a perspective view showing the disc drive apparatus according to the embodiment of the present invention from the back side;

FIG. 5 is a front view of the disc drive apparatus according to an embodiment of the present invention;

FIG. 6 is a rear view of the disc drive apparatus according to an embodiment of the present invention;

FIG. 7 is a bottom view of the disc drive apparatus according to an embodiment of the present invention;

FIG. 8 is a right-hand side elevational view of the disc drive apparatus according to an embodiment of the present invention;

FIG. 9 is an explanatory diagram showing a main portion of the disc drive apparatus shown in FIG. 6 and to which reference will be made in explaining the state in which a supporting plate is removed to expose a feed screw shaft;

FIG. 10 is a perspective view showing the state in which a chassis is removed from the disc drive apparatus shown in FIG. 3 to expose a pickup moving means;

FIG. 11 is a front view showing a table rotating means, the optical pickup device and the pickup moving means of the disc drive apparatus shown in FIG. 3;

FIG. 12 is a bottom view showing the table rotating means, the optical pickup device and the pickup moving means of the disc drive apparatus shown in FIG. 3;

FIG. 13 is a right-hand side elevational view showing the table rotating means, the optical pickup device and the pickup moving means of the disc drive apparatus shown in FIG. 3;

FIG. 14 is a perspective view showing a disc type camera apparatus of an electronic device including a disc drive apparatus according to an embodiment of the present invention from the front side;

FIG. 15 is a perspective view showing the disc type camera apparatus of the electronic device including the disc drive apparatus according to the embodiment of the present invention from the rear side;

FIG. 16 is a perspective view showing the disc type camera apparatus of the electronic device including the disc drive apparatus according to the embodiment of the present invention from the front side in which a disc lid of the disc type camera apparatus being opened;

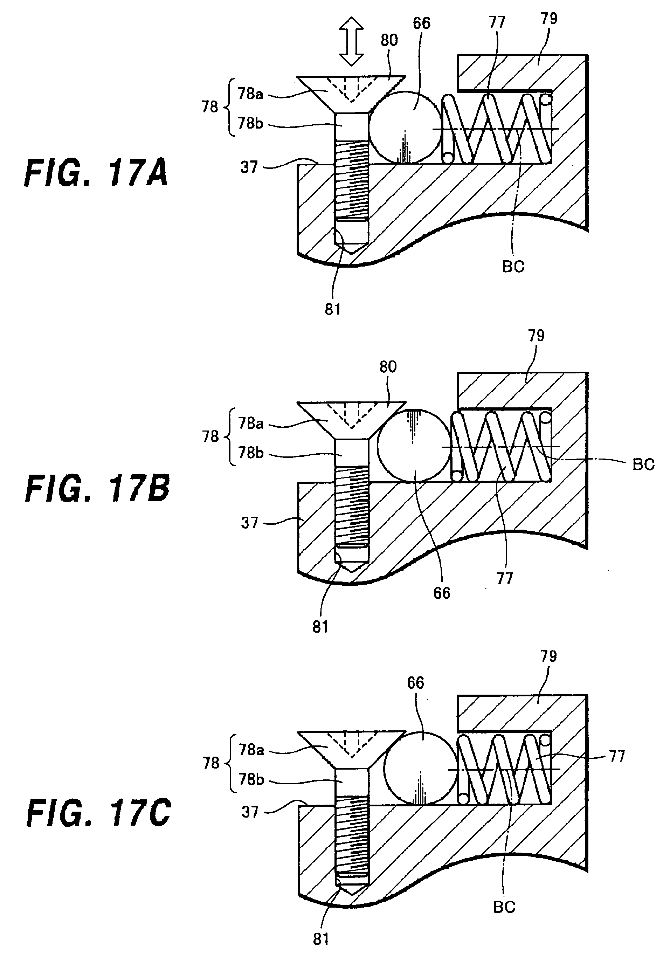

FIGS. 17A, 17B and 17C are respectively diagrams showing a first inventive example of a supporting means of a guide member of the disc drive apparatus according to an embodiment of the present invention; wherein FIG. 17A is a diagram to which reference will be made in explaining the state in which a guide member is located close to an adjustment screw; FIG. 17B is a diagram to which reference will be made in explaining the state in which the guide member is located at the intermediate position; and FIG. 17C is a diagram to which reference will be made in explaining the state in which the guide member is located distant from the adjustment screw, respectively;

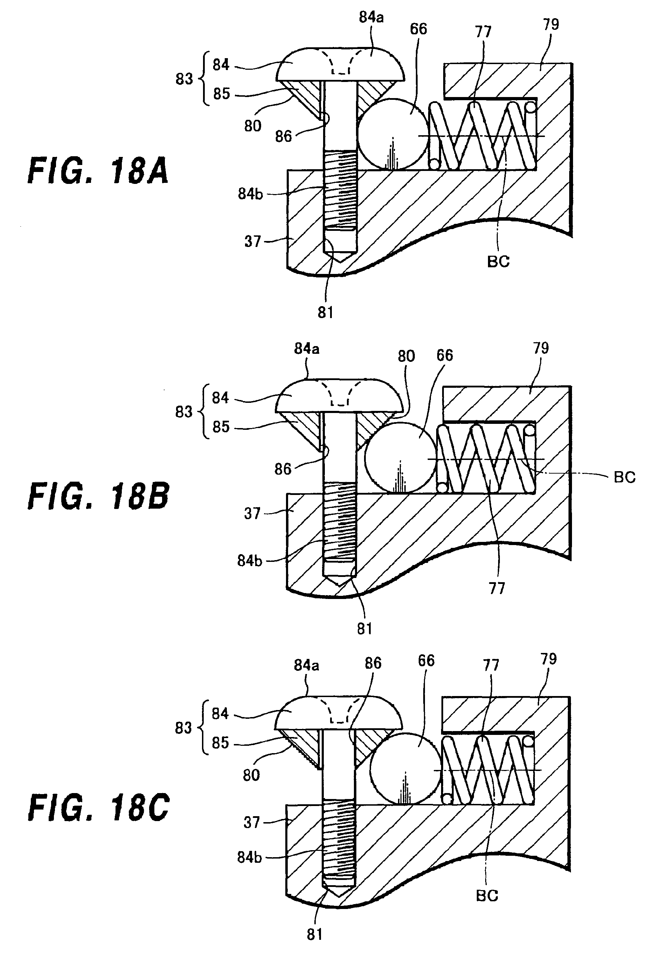

FIGS. 18, 18B and 18C are respectively diagrams showing a second inventive example of a supporting means of a guide member of the disc drive apparatus according to an embodiment of the present invention; wherein FIG. 18A is a diagram to which reference will be made in explaining the state in which a guide member is located close to an adjustment screw; FIG. 18B is a diagram to which reference will be made in explaining the state in which the guide member is located at the intermediate position; and FIG. 18C is a diagram to which reference will be made in explaining the state in which the guide member is located distant from the adjustment screw, respectively;

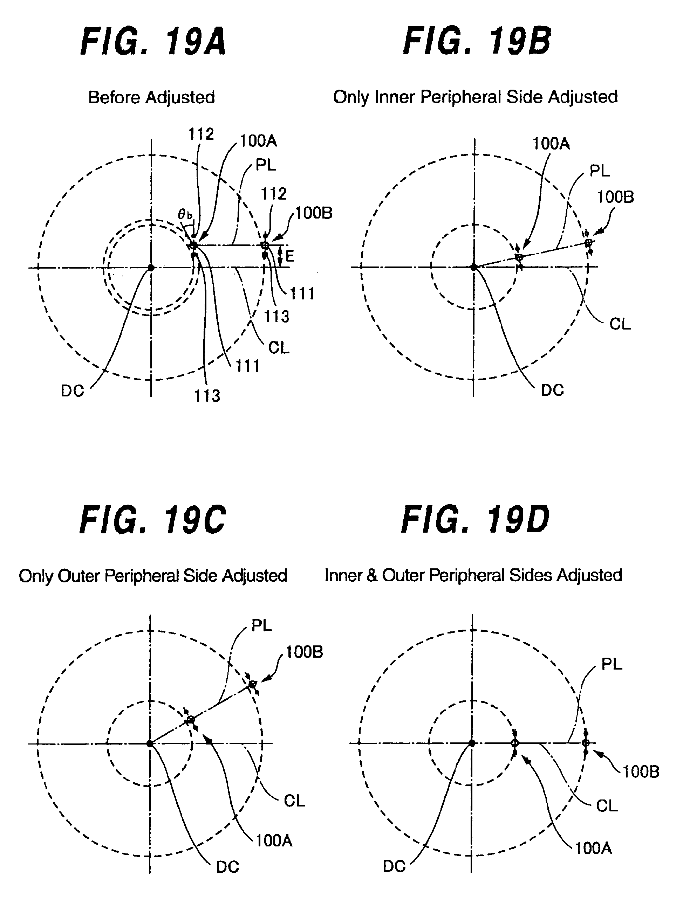

FIGS. 19A, 19B, 19C and 19D are respectively diagrams used to explain operations for adjusting the movement locus of the optical pickup of the disc drive apparatus according to an embodiment of the present invention; wherein FIG. 19A is a diagram to which reference will be made in explaining the state in which the movement locus is parallel to the central line of the disc; FIG. 19B is a diagram to which reference will be made in explaining the state in which the extended line of the movement locus is adjusted by adjusting a supporting means located close to the rotation center of a turntable so that the extended line may pass the rotation center of the turntable; FIG. 19C is a diagram to which reference will be made in explaining the state in which the extended line of the movement locus is adjusted by adjusting a supporting means located distant from the rotation center of the turntable such that the extended line may pass the rotation center; and FIG. 19D is a diagram to which reference will be made in explaining the state in which the movement locus is adjusted by adjusting both of the above-mentioned supporting means so that the movement locus may become coincident with the central line of the disc, respectively;

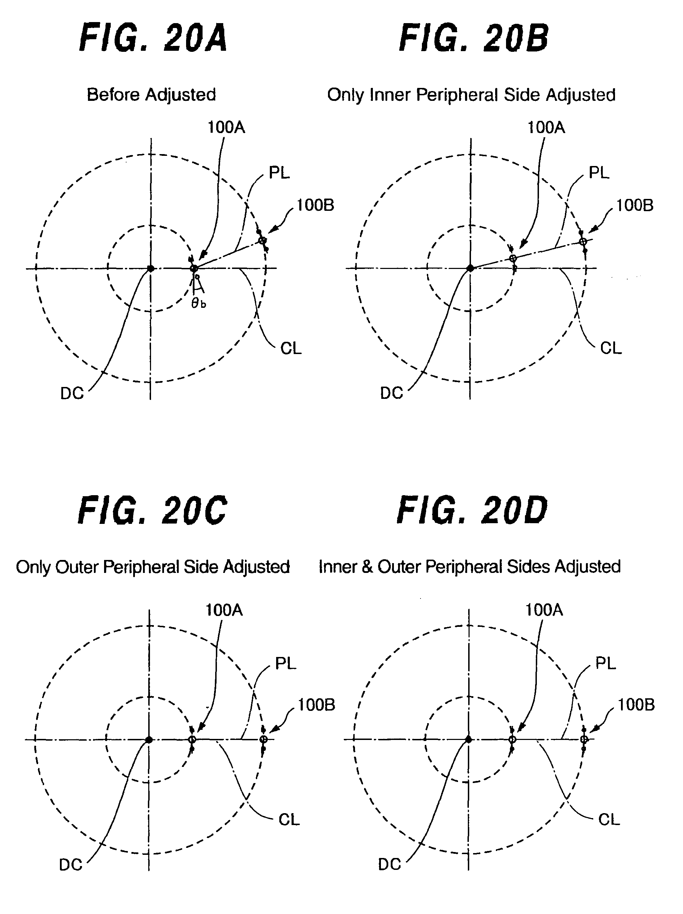

FIGS. 20A, 20B, 20C and 20D are respectively diagrams used to explain operations for adjusting the movement locus of the optical pickup of the disc drive apparatus according to an embodiment of the present invention; wherein FIG. 20A is a diagram to which reference will be made in explaining the state in which the movement locus crosses the central line of the disc at an angle of θ; FIG. 20B is a diagram to which reference will be made in explaining the state in which the extended line of the movement locus is adjusted by adjusting a supporting means located close to the rotation center of a turntable so that the extended line may pass the rotation center of the turntable; FIG. 20C is a diagram to which reference will be made in explaining the state in which the extended line of the movement locus is adjusted by adjusting a supporting means located distant from the rotation center of the turntable such that the extended line may pass the rotation center of the turntable; and FIG. 20D is a diagram to which reference will be made in explaining the state in which the movement locus is adjusted by adjusting both of the above-mentioned supporting means so that the movement locus may become coincident with the central line of the disc, respectively; and

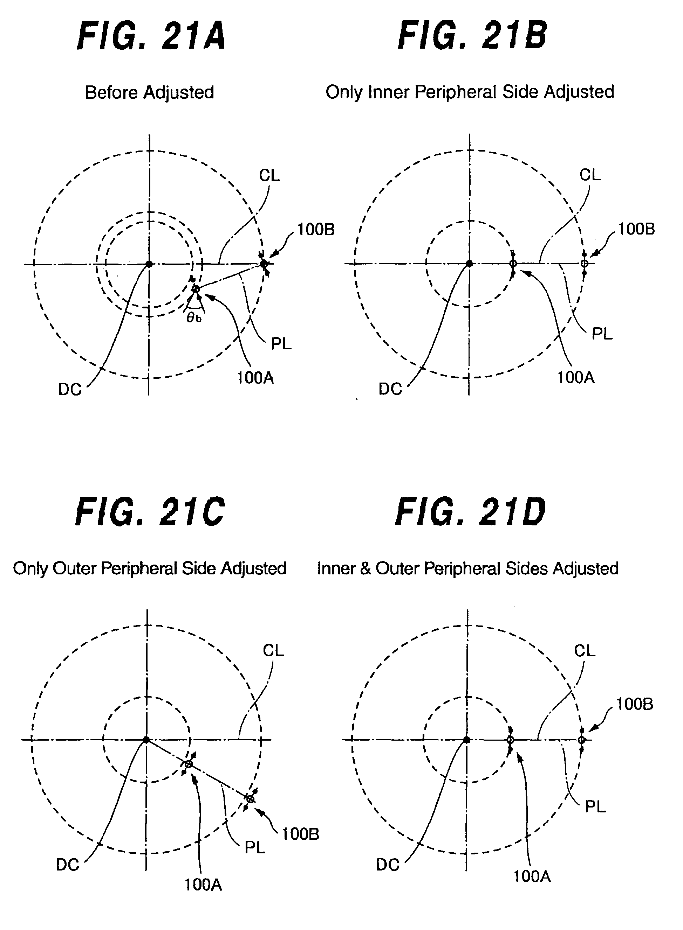

FIGS. 21A, 21B, 21C and 21D are respectively diagrams used to explain operations for adjusting the movement locus of the optical pickup of the disc drive apparatus according to an embodiment of the present invention; wherein FIG. 21A is a diagram to which reference will be made in explaining the state in which the movement locus crosses the central line of the disc at an angle of θ; FIG. 21B is a diagram to which reference will be made in explaining the state in which the extended line of the movement locus is adjusted by adjusting a supporting means located close to the rotation center of a turntable so that the extended line may pass the rotation center; FIG. 21C is a diagram to which reference will be made in explaining the state in which the extended line of the movement locus is adjusted by adjusting a supporting means located distant from the rotation center of the turntable such that the extended line may pass the rotation center of the turntable; and FIG. 21D is a diagram to which reference will be made in explaining the state in which the movement locus is adjusted by adjusting both of the above-mentioned supporting means so that the movement locus may become coincident with the central line of the disc, respectively.

DESCRIPTION OF THE PREFERRED EMBODIMENTS

According to embodiments of the present invention, a disc drive apparatus in which adjustment work by which an optical pickup can trace a disc central line can be carried out with ease, deterioration of tracking efficiency can be suppressed to the minimum and which can be improved in performance for recording and reproduction and an electronic device including such disc drive apparatus can be realized by a simple structure.

Embodiments of the present invention will now be described in detail with reference to the drawings.

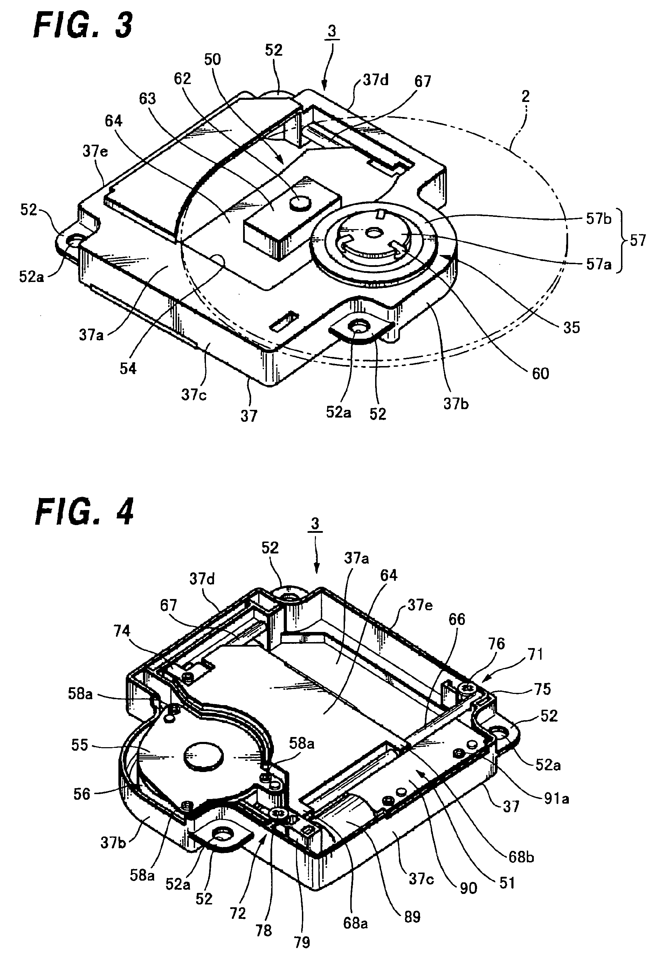

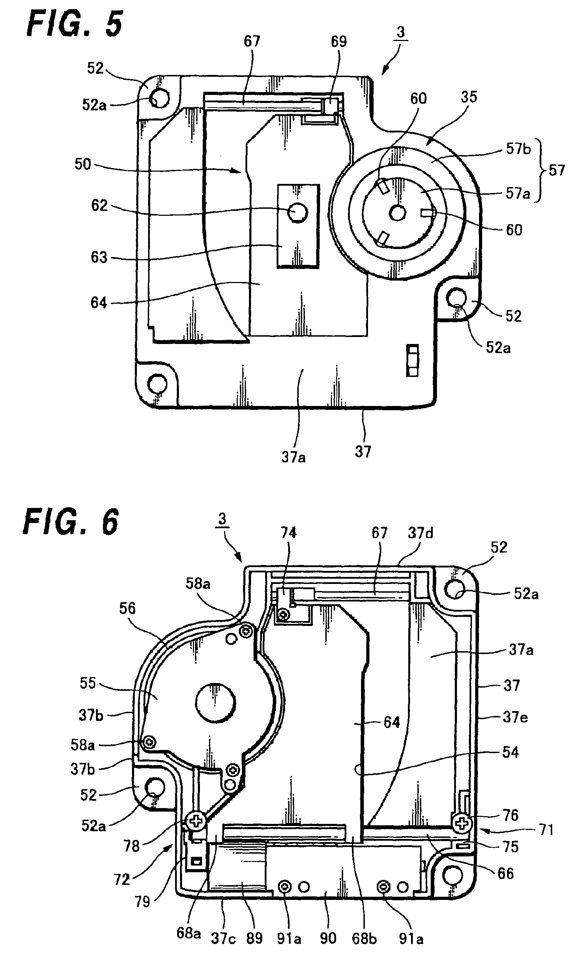

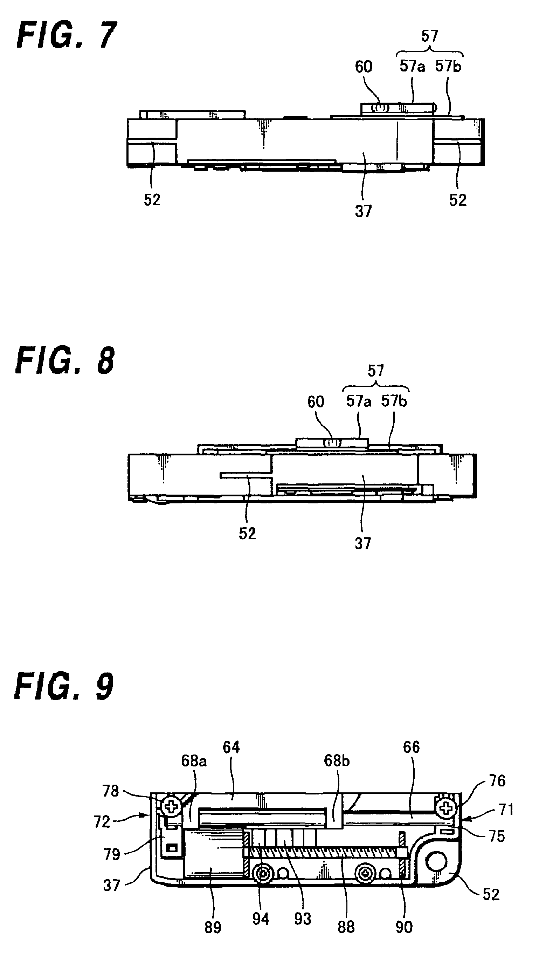

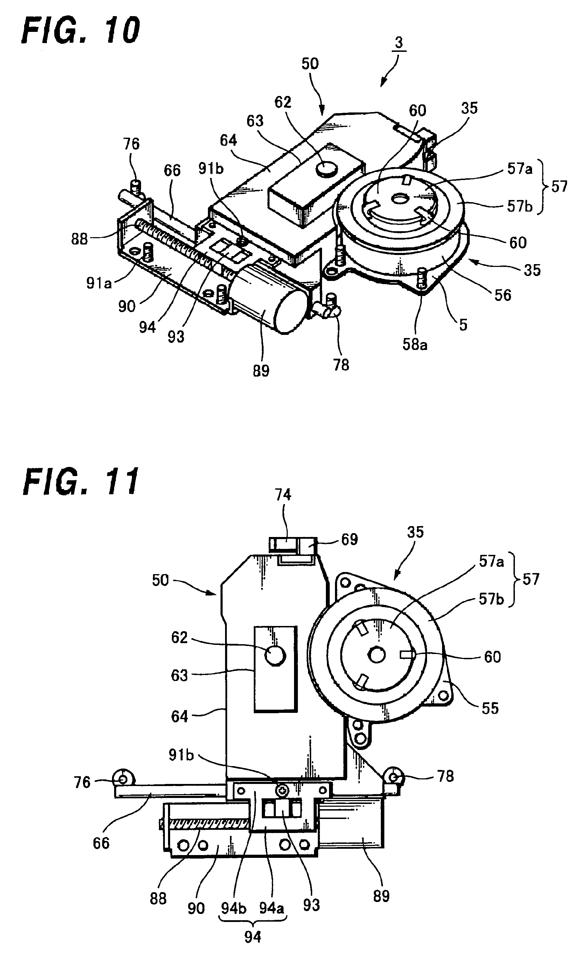

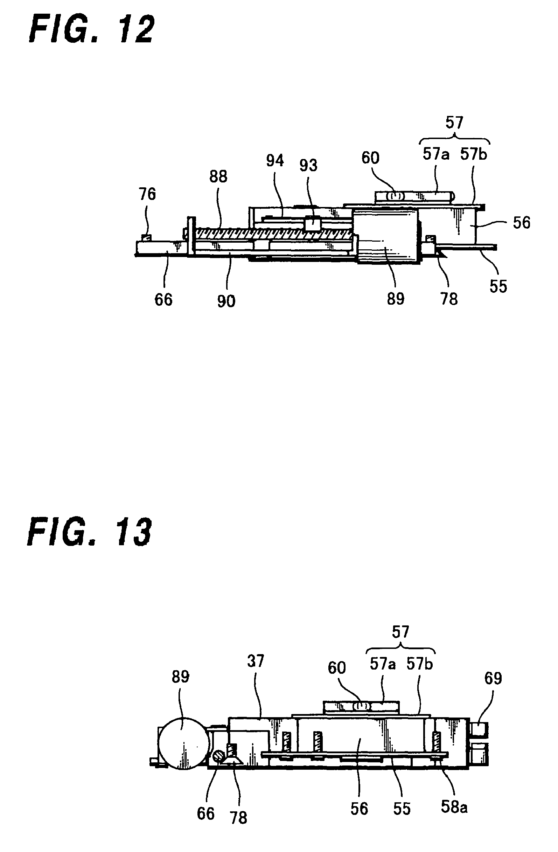

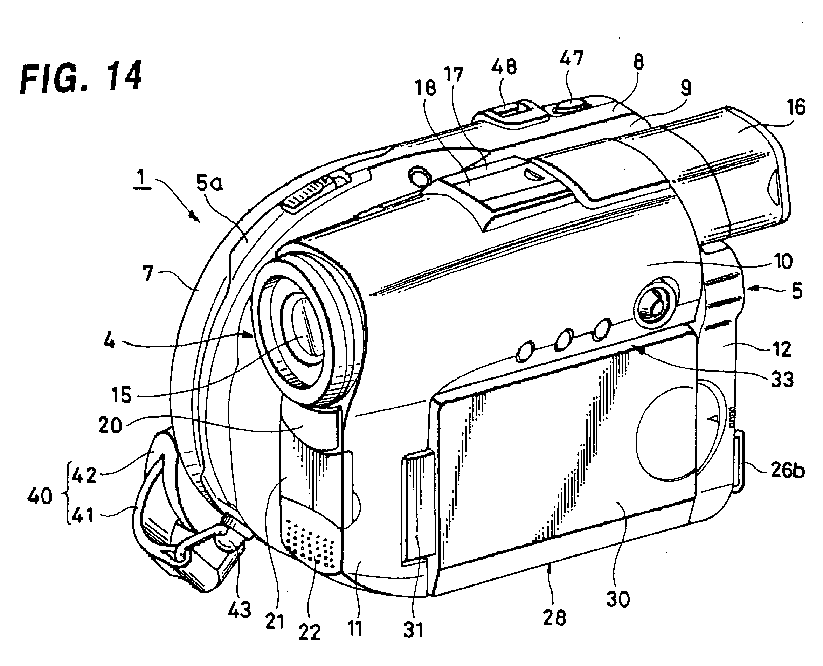

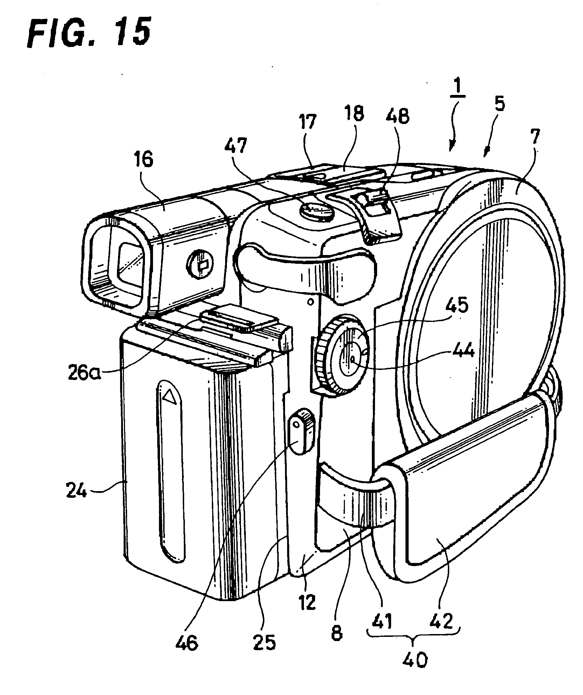

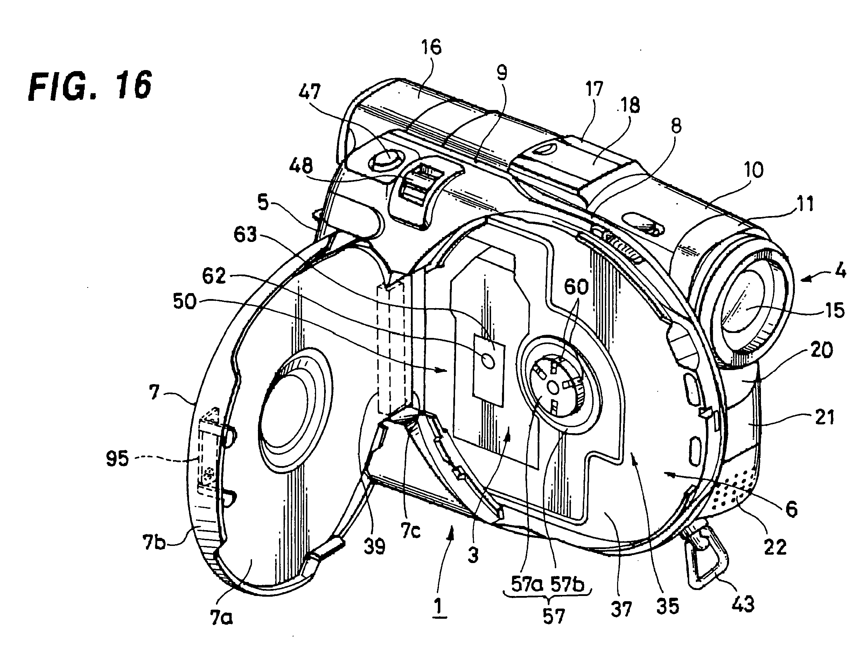

FIG. 3 to FIGS. 21A to 21D are diagrams showing the embodiments of the present invention. More specifically, FIGS. 3 to 13 are diagrams showing a disc drive apparatus according to an embodiment of the present invention, wherein FIG. 3 is a perspective view showing a disc drive apparatus of an embodiment of the present invention from the front side; FIG. 4 is a perspective view showing the disc drive apparatus of an embodiment of the present invention from the rear side; FIG. 5 is a front view thereof; FIG. 6 is a rear view thereof; FIG. 7 is a bottom view thereof; FIG. 8 is a right-hand side elevational view thereof; FIG. 9 is an explanatory diagram showing a main portion of FIG. 6; FIG. 10 is a perspective view showing the disc drive apparatus with its chassis being removed; FIG. 11 is a front view showing the disc drive apparatus with its chassis being removed; FIG. 12 is a bottom view showing the disc drive apparatus with its chassis being removed; and FIG. 13 is a right-hand side elevational view showing the disc drive apparatus with its chassis being removed. FIGS. 14 to 16 are diagrams showing an electronic device including a disc drive apparatus according to an embodiment of the present invention, wherein FIG. 14 is a perspective view showing a disc type camera apparatus, which shows a specific example of an electronic device, from the front side; FIG. 15 is a perspective view showing the above-mentioned disc type camera apparatus from the rear side; and FIG. 16 is a perspective view showing the above-mentioned disc type camera apparatus with its disc lid being opened.

Further, FIGS. 17A to 17C are respectively explanatory diagrams showing a first inventive example of a supporting means of the disc drive apparatus according to an embodiment of the present invention; FIGS. 18A to 18C are respectively explanatory diagrams showing a second inventive example of the supporting means of the disc drive apparatus according to an embodiment of the present invention; FIGS. 19A to 19D are respectively explanatory diagrams showing a first example of adjustment of the supporting means of the disc drive apparatus according to an embodiment of the present invention; FIGS. 20A to 20D are respectively explanatory diagrams showing a second example of adjustment of the supporting means of the disc drive apparatus according to an embodiment of the present invention; and FIGS. 21A to 21D are respectively diagrams showing a third example of adjustment of the supporting means of the disc drive apparatus according to an embodiment of the present invention.

An electronic device, generally depicted by reference numeral 1 in FIGS. 14 to 16, is a camera apparatus using an 8 cm DVD-R (digital video disc-recordable) which shows a specific example of a disc-like recording medium serving as information storage media. This camera apparatus is able to record an optical image on the DVD-R in the form of an electrical signal after the optical image had been converted into the electrical signal by a CCD (charge-coupled device) or it is able to display such optical image on a suitable display apparatus such as a liquid-crystal monitor. This camera apparatus will hereinafter be referred to as a "disc type camera apparatus". However, the disc-like recording medium according to the present invention is not limited to the DVD-R. It is needless to say that other recordable optical discs such as a DVD-RW (DVD- rewritable) and a DVD-RAM (DVD-random-access memory) can be used as the disc-like recording medium of the present invention and that disc-like recording mediums of other recording systems such as a magneto-optical disc and a magnetic disc can be applied to the disc-like recording medium of the present invention.

As illustrated, this disc type camera apparatus 1 is composed of a disc drive apparatus 3 (see FIGS. 3 to 13 which will be described later on) for rotating a DVD-R 2 (see FIG. 3), which is detachably attached to the disc type camera apparatus 1, to record (write) and reproduce (read) an information signal on and from the DVD-R 2, a control circuit (not shown) for controlling driving of this disc drive apparatus 3, a lens apparatus 4 for picking up an image of an object as light so that light of image may be introduced into the CCD, an outer case 5 for accommodating therein the disc drive apparatus 3 and other components, a disc lid 7 rotatably attached to the outer case 5 so as to open and close a disc compartment portion 6 and the like.

The outer case 5 is composed of a disc side panel 8, a central portion panel 9 and a display apparatus side panel 10, which are combined in a triple combination fashion, a front panel 11 and a rear panel 12 located ahead of and behind the optical axis direction of the lens apparatus 4 and which may be combined with these panels 8 to 10 and a partition panel (not shown) located in the inside of the central portion panel 9. These panels 8 to 12 constitute a hollow casing. The disc drive apparatus 3 is elastically supported to the partition panel at its surface opposing the disc side panel 8 through mount insulators (not shown). These panels 8 to 12 can be assembled and disassembled at their suitable overlapping portions or through other members by fixing means consisting of fixed screws.

The lens apparatus 4 is fixed to the upper portion of the outer case 5 in the incorporated state, and an objective lens 15 of the lens apparatus 4 is penetrated through the upper portion of the front panel 11 in the forward direction and thereby exposed to the front of the lens apparatus 4. Although not shown, the CCD is located behind the lens apparatus 4 within the outer case 5 and a viewfinder 16 is located behind the CCD.

The viewfinder 16 is exposed to the upper portion of the outer case 5 and it can be moved back and forth in the optical axis direction of the lens apparatus 4 with a predetermined distance by a finder moving mechanism. This viewfinder 16 can be rotated about the front side and it can be rotated about the back side in the upper and lower direction. Thus, the angle of the viewfinder 16 can be adjusted at an arbitrary angle within a predetermined angular range (approximately 90 degrees in this embodiment) from the horizontal state in which it is made parallel to the optical axis of the lens apparatus 4 to the state in which its rear portion is lifted in the upper direction. The angle of the viewfinder 16 can be adjusted at any position from the front end portion to the rear end portion of the finder moving mechanism.

Further, an accessory shoe 17 is attached to the upper portion of the outer case 5 and accessories such as a video light and an external microphone are detachably attached to the accessory shoe 17. The accessory shoe 17 is located immediately in front of the viewfinder 16 and an insertion slot by which various accessories can be attached to the accessory shoe 17 may be opened when the viewfinder 16 is moved backwardly. Accessories can be attached to the accessory shoe 17 in the state in which this insertion slot is open. When the viewfinder 16 is moved in the forward direction after the accessory was attached to the accessory shoe 17, the insertion slot is closed so that it becomes impossible for the cameraman to remove the accessory from the accessory shoe 17. It is customary that a shoe cap 18 which may serve as a lid to fill the space portion of the accessory shoe 17 when the accessory shoe 17 is attached to the accessory shoe 17.

Also, a remote control light-receiving portion 20, microphone terminals and a stereo type built-in microphone 22 are disposed on the front of the front panel 11, in that order, from above. The remote control light-receiving portion 20 is a receiving portion which is used to remote-control this disc type camera apparatus 1. This remote control portion 20 may serve as an infrared light-emitting portion as well to emit infrared rays for use in various purposes such as to automatically adjust focus. Also, the microphone terminals consist of video terminals and audio terminals and these terminals are covered with a terminal cover 21 so that these terminals can be opened and closed.

As shown in FIG. 15, the rear panel 12 of the outer case 5 has a battery compartment portion 25 provided thereon and to which a power supply battery 24 is attached detachably. The battery compartment portion 25 is opened in the rear surface and lower surface of the rear panel 12 so that the cameraman can insert the power supply battery 24 into the battery compartment portion 25 from the lower backward direction obliquely and that the cameraman can remove the power supply battery 24 from the battery compartment portion 25 from the same direction. Further, the rear panel 12 has two metal support fittings 26a and 26b provided thereon to support a suspension strap of the disc type camera apparatus 1. Of the two support metal fittings 26a and 26b, one metal support fittings 26a is attached to the lower portion of the left-hand side of the outer case 5 and the other metal support fittings 26b is attached to the upper portion of the right-hand side of the outer case 5.

As shown in FIG. 14, a display apparatus 28 is attached to the display apparatus side panel 10 of the outer case 5 such that its attitude can be varied. The display apparatus 28 is composed of a flat plate-like liquid-crystal monitor (not shown), a panel case 30 in which this liquid-crystal monitor is accommodated and a panel supporting portion 31 to support this panel case 30 to the outer case 5 such that attitude of the panel case 30 can be changed. The panel supporting portion 31 has a horizontal rotation function by which the panel case 30 can be rotated about the vertical axis approximately 90 degrees in the horizontal direction and a front and back rotation function by which the panel case 30 can be rotated about the horizontal axis approximately 180 degrees in the front and back direction.

Thus, as shown in FIG. 14, the display apparatus 28 can be placed in the housed state in which it may be housed within the side wall of the outer case 5, the display apparatus 28 can be placed in the state in which the panel case 30 may be rotated 90 degrees so that the liquid-crystal monitor may be opposed to the rearward, the display apparatus 28 can be placed in the state in which the panel case 30 may be rotated 180 degrees so that the liquid-crystal monitor may be opposed to the forward and the display apparatus 28 can be placed in the intermediate state of the above-mentioned states arbitrarily. Further, an operation portion 33 consisting of a plurality of operation buttons is provided on the upper portion of the display apparatus side panel 10.

As shown in FIGS. 15 and 16, the outer case 5 has the disc compartment portion 6 provided on its side surface and to which the disc-like recording medium is attached detachably. This disc compartment portion 6 is formed of a constant area having an opening portion to expose a part of the disc drive apparatus 3. In this embodiment, the disc compartment portion 6 is formed as the area of a size large enough to correspond to the 8 cm DVD-R 2 which is shown as a specific example of the disc-like recording medium. This disc compartment portion 6 has at substantially its central portion provided a table rotating means 35 of the disc drive apparatus 3 and the DVD-R 2 can be attached to and fixed to the turntable 36 provided at substantially the central portion of the table rotating means 35.

The disc drive apparatus 3 is fixed to the outer case 5 through a chassis 37. As shown in FIG. 16, the disc compartment portion 6 in which the disc drive apparatus 3 is located is covered with the disc lid 7, which is rotatably supported at its side surface portion to the disc side panel 8, so that it may be opened and closed. The disc lid 7 may be formed as a shape coincident with the shape of the disc compartment portion 6 and it is fixed to the outer case 5 by a lid rotary shaft portion 38 attached to the rear side. The disc lid 7 includes a flat surface portion 7a covering the disc compartment portion 6 and a peripheral surface portion 7b continued to substantially the whole periphery of the outer peripheral edge of this flat surface portion 7a. The peripheral surface portion 7b of this disc lid 7 may be constructed so as to be fitted into an outer peripheral side recess portion of the disc compartment portion 6 of the disc side panel 8.

Although not shown, the lid rotary shaft portion 38 is composed of a support shaft which passes through a square portion 7c formed on the back side of the disc lid 7 and a bearing member having a pair of bearing pieces to fixedly support both ends of this support shaft. The bearing member is fixed to the disc side panel 8, whereby the disc lid 7 is supported so as to become freely rotatable. This lid rotary shaft portion 38 is provided with a stopper portion by which a maximum opening angle (for example, 90 degrees) of the disc lid 7 can be set.

The above-mentioned lid rotary shaft portion 38 is attached to the disc side panel 8 in the state in which the axial direction of the support shaft is set in the upper and lower direction. Thus, the disc lid 7 is rotatably supported to the rear portion of the disc side panel 8 through the lid rotary shaft portion 38. As a result, the disc lid 7 can be opened approximately 90 degrees in the lateral direction from the front in the state in which the front of the disc type camera apparatus 1 is faced to the front side. Although not shown, the lid rotary shaft portion 38 has a spring member attached thereto to enable the disc lid 7 to stand still at an arbitrary opening position within a constant opening angular range and also to enable the disc lid 7 to be biased in the opening side under spring force when the disc lid 7 exceeds the above constant opening angular range.

The disc side panel 8 and the central portion panel 9 have a lid opening and closing mechanism of the disc lid 7 provided therebetween although not shown. This lid opening and closing mechanism has a function to lock the disc lid 7, which closed the disc compartment portion 6, in the closed state and a function to release the disc lid 7 from being locked in the closed state. Also, a hand belt 40 is attached to the disc side panel 8 so as to surround the disc lid 7. The hand belt 40 holds the hand of the cameraman who grips a grip portion 5a of the outer case 5 to thereby prevent the cameraman from dropping the disc type camera apparatus 1 inadvertently.

This hand belt 40 is composed of a belt member 41 of which respective ends are fixed to the disc side panel 8 and a protecting pad 42 attached to this belt member 41 so as to come in contact with the back of cameraman's hand. One end of the belt member 41 is joined to an attachment fittings 43 fixed to the lower portion of the front side of the disc side panel 8 and the other end thereof is inserted into the inside from a through-hole bored at the intermediate portion of the back side of the disc side panel 8 and thereby fixed to the attachment fittings attached to the inside of the disc side panel 8.

As shown in FIG. 15, a power button 44, a mode switch dial 45 and a record button 46 are disposed at the rear portion of the disc side panel 8. The mode switch dial 45 is formed as a ring-like dial and the power button 44 is housed within the hole of the ring-like mode switch dial 45. The power button 44 is formed of a push-push type switch means and the supply of power from the power supply battery 24 is turned ON and OFF each time the power button 44 is depressed. The mode switch dial 45 is adapted to select operation modes such as recording mode. The cameraman is able to select a desired mode from three modes of "still picture mode", "moving picture mode" and "watch/edit mode" by rotating the mode switch dial 45. Also, the recording button 46 is formed of a push-push type switch means and shooting of moving picture can be started and stopped repeatedly each time the recording button 46 is depressed.

Further, a shutter button 47 and a zoom lever 48 are located at the upper portion of the rear side of the disc side panel 8. The shutter button 47 is adapted to shoot still pictures, and one still picture may be shot each time the cameraman depresses the shutter button 47. Also, the zoom lever 48 is adapted to enlarge or reduce an image during shooting or reproduction, and the cameraman can adjust a magnification in a stepless fashion within a constant range in response to the amount in which the cameraman operates the zoom lever 48.

ABS (acrylonitrile-butadiene-styrene) resin, for example, may be suitable as a material of the disc side panel 8, the central portion panel 9, the display apparatus side panel 10, the front panel 11 and the rear panel 12 constructing the above-described outer case 5. However, the above-mentioned suitable material is not limited to ABS and other engineering plastics can of course be applied to the above-mentioned suitable material. In addition, it is possible to use other materials than synthetic resin and metals such as aluminum alloy as the above-mentioned suitable material.

The inside of the outer case 5 is divided in the right and left direction (direction crossing the optical axis of the lens apparatus 4) by a partition panel, whereby the side of the outer case 5 is divided into a first chamber on the side of the disc lid 7 and a second chamber on the side of the display apparatus. The partition panel is formed of a plate-like member and fastened to the inside of the outer case 5 by fixed screws. A stainless steel (SUS), for example, may be suitable as the material of the partition panel. Steel, aluminum alloy and other metals can of course be applied to the material of the partition panel and also engineering plastic other than metals can be used as the material of the partition panel.

Although not shown, the disc drive apparatus 3 is housed within the first chamber of the outer case 5 and the lens apparatus 4 and suitable circuit elements such as a control circuit unit are housed within the second chamber. To this end, a plurality of protrusions is provided on one surface side of the partition panel to support the disc drive apparatus 3 and a plurality of supporting pieces is provided on the other surface to support the lens apparatus 4 and suitable elements such as a printed circuit board. The control circuit unit is composed of a microcomputer, a storage apparatus (RAM (random-access memory), ROM (read-only memory)), capacitors, resistors and other electronic assemblies, a printed circuit board with these electronic assemblies mounted thereon and the like.

As shown in FIGS. 6 to 13, the disc drive apparatus 3 is composed of a chassis 37 attached through the partition panel to the outer case 5, the table rotating means 35 fixed to this chassis 37, an optical pickup device 50 which shows a specific example of the optical pickup device, an optical pickup moving means 51 for moving this optical pickup device 50 within a predetermined range in the radius direction of the DVD-R 2.

The chassis 37 includes an upper surface portion 37a and four side surface portions 37b, 37c, 37d and 37e continuing to four sides of this upper surface portion 37a. The chassis 37 is formed of a box-like member of which lower surface is opened and it is integrally made of an insulating resin material. Insulator attachment portions 52 are provided at three portions, in total, of the adjacent two corner portions of this chassis 37 and an intermediate portion of the side opposing to the side located between the two corner portions. Insertion holes 52a are formed on the respective insulator attachment portions 52 and mount insulators are attached into the insertion holes 52a. The mount insulators are formed of elastic members made of an insulating material and the chassis 37 is supported to the outer case 5 with elasticity through these mount insulators.

An opening portion 54 is formed on the upper surface portion 37a of the chassis 37 so as to expose the upper surface of the optical pickup device 50. The table rotating means 35 is provided on one side of this chassis 37. The table rotating means 35 is composed of a motor base 55 which shoes a specific example of the chassis side member fixed to the lower surface of the chassis 37, a spindle motor 56 held and fixed on this motor base 55 and a turntable 57 provided on the rotary portion of this spindle motor 56. The motor base 55 is made of a conductive metal material and it is fixed to the chassis 37 by a plurality of fixed screws 58a. The present invention is not limited thereto and it is needless to say that the spindle motor 56 may instead be directly fixed to the chassis 37.

The spindle motor 56 is composed of a fixed portion fixed to the motor base 55 by a fixing means such as a caulking means and the rotary portion rotatably supported to this fixed portion. The turntable 57 is integrally provided on the rotary portion. The turntable 57 is composed of a disc fitting portion 57a to which the center hole of the DVD-R 2 is fitted and a disc holder portion 57b on which the peripheral edge portion of the center hole of the DVD-R 2 is held. The disc fitting portion 57a of the turntable 57 has a plurality of lock clicks 60 (three lock clicks 60 in this embodiment) located at an equal spacing in the peripheral direction thereof so as to be engaged with the peripheral edge portion of the center hole of the DVD-R 2 to hold the DVD-R 2. Each lock click 60 is biased in the outside of the radius direction under spring force of a spring (not shown), and the DVD-R 2 is properly positioned and fixed to the predetermined position of the DVD-R 2 under spring force of this spring.

The optical pickup device 50 is disposed near the table rotating means 35. The optical pickup device 50 is composed of a biaxial actuator 63 including a pickup lens 62 opposed to the information recording surface of the DVD-R 2, a slide member 64 having this biaxial actuator 63 mounted thereon and the like. The slide member 64 can be guided by a main guide shaft 66 and sub-guide shaft 67, which show specific examples of two guide members, and moved back and forth relative to the table rotating means 35 (that is, the slide member 64 can come close to or come away from of the table rotating means 35).

The main guide shaft 66 is formed of a straight round rod made of a metal and the main guide shaft 66 is slidably penetrated into bearing holes of a pair of bearing portions 68a and 68b provided at one end of the slide member 64 along the longitudinal direction. The bearing holes of the pair of bearing portions 68a and 68b are set on the same axis in the axial direction of the main guide shaft 66 at a proper space. When one main guide shaft 66 is supported by the pair of bearing portions 68a and 68b, it is possible to secure properties by which the slide member 64 can move straight.

The sub-guide shaft 67 is formed as one body with the chassis 37 in this embodiment. Specifically, the sub-guide shaft 67 is formed of a round bar-like protruded rail portion of which cross-section is circular and it is protruded from the inner surface of the side surface portion 37d to the inside. This sub-guide shaft 67 is slidably penetrated into a bearing groove of a second bearing portion 69 provided at the other end of the longitudinal direction of the slide member 64. The bearing groove of the second bearing portion 69 is provided so as to be opened in the lateral direction of the longitudinal direction of the slide member 64. As a consequence, although the main guide shaft 66 and the sub-guide shaft 67 are able to be displaced relatively in the plane direction in which the slide member 64 is moved, they may not be displaced in the direction perpendicular to the plane direction.

Also, the main guide shaft 66 and the sub-guide shaft 67 are opposed to each other with a predetermined space across the table rotating means 35 and also they are placed in substantially parallel to each other. Then, the main guide shaft 66 is fixed at its respective end portions of the axial direction to the chassis 37 by two kinds of supporting means 71 and 72. A leaf spring 74 is provided on the second bearing portion 69 to absorb wobbling between it and the sub-guide shaft 67. A tip end of the leaf spring 74 is brought in contact with the lower surface of the sub-guide shaft 67 and the lower surface of the sub-guide shaft 67 is spring-biased in the upper direction under spring force of this leaf spring 74, whereby the slider member 64 is urged against the lower direction to absorb the above-described wobbling.

The first supporting means 71 for supporting one end portion of the main guide shaft 66 to the chassis 37 is adapted to properly position and fixedly support the main guide shaft 66 at the predetermined position. As shown in FIGS. 4 and 6, the first fixing means 71 is composed of a bearing portion 75 having a concave portion into which one end portion of the main guide shaft 66 is inserted and a fixed screw 76 for fixing one end portion of the main guide shaft 66 to this bearing portion 75 with pressure.

A concave portion of the bearing portion 75 may be a U-like groove or a V-like groove and it is needless to say that this concave portion of the bearing portion 75 may be a square groove and grooves of other proper shapes. Also, although oval screws, flat screws, pan-head screws, hexagon bolts, hexagon socket head cap screws whose lower surfaces of the heads are developed in the direction perpendicular or substantially perpendicular to the axial line and the like may be suitably used as the fixed screw 76, the present invention is not limited thereto and instead flat fillister head screws, oval countersunk screws and flat head bolts having head portions (flat heads) with inverse cone-like tapered portions and the like can be suitably used as the fixed screw 76. In the first supporting means 71, the end portion of the main guide shaft 66 is urged against and fixed to the bearing portion 75 by the chin portion which is the lower surface of the head of the fixed screw 76.

The second supporting means 72 to support the other end portion of the main guide shaft 66 to the chassis 37 is adapted to support the main guide shaft 66 such that the main guide shaft 66 may be moved in the direction perpendicular to the axial line within a predetermined range of the plane direction of the chassis 37. While the second supporting means 72 is illustrated similarly to the first supporting means 71 in FIGS. 4 and 6, a first inventive example of the second supporting means 72 is illustrated in detail in FIGS. 17A to 17C in an enlarged-scale.

As shown in FIGS. 17A to 17C, the second supporting means 72 is composed of a coil spring 77 which shows a specific example of an elastic member, an adjustment screw 78 for hindering movement of the main guide shaft 66 biased under spring force of the coil spring 77 and a spring holder 79 for holding the coil spring 77 at the predetermined position of the chassis 37. On the plane of the chassis 37, the coil spring 77 is located on one side of the direction perpendicular to the direction in which the axial line of the main guide shaft 66 is extended and the adjustment screw 78 is located on the other side which is the opposite side of the side in which the coil spring 77 is located.

The coil spring 77 is located in such a manner that its spring central line BC may be extended in the direction perpendicular to the axial line of the main guide shaft 66. One end of the coil spring 77 is supported to the spring holder 79. The spring holder 79 may be formed as one body with the chassis 37 as illustrated. Alternatively, the spring holder 79 may be formed of a member different from that of the chassis 37 and it may be fixed to the chassis 37 by suitable fixing means such as fixed screws. A tip end of the coil spring 77 is brought in contact with the side surface of the main guide shaft 66 and the coil spring 77 is provided in such a manner that the adjustment screw 78 may be opposed to substantially an extended line of its spring central line BC. The elastic member is not limited to the coil spring 77 shown in this embodiment. It is needless to say that not only spring members such as a leaf spring and a volute spring but also silicon rubber, urethane rubber and other rubber-like elastic materials can be used as the material of the above elastic member.

The adjustment screw 78 is formed of a flat head screw member including a flat head 78a in which an inverse cone-like tapered portion 80 is formed on the lower surface of the head and a shaft portion 78b continuing to the small diameter side of the flat head 78a. The above-mentioned small countersunk screw, oval countersunk screw and flat head bolt can be suitably enumerated as a specific example of this adjustment screw 78. A tapped hole 81, which is opened in the upper surface, is bored on the chassis 37 in response to this adjustment screw 78 and the shaft portion 78b of the adjustment screw 78 is fitted into the tapped hole 81.

Thus, when the cameraman rotates the adjustment screw 78, the height of the flat head 78a is increased or decreased in response to the rotation direction of the adjustment screw 78 so that the attitude (inclination) of the main guide shaft 66 can be changed by the height of the flat head 78a. Specifically, when the adjustment screw 78 is adjusted in such a manner that the outer peripheral surface of the main guide shaft 66 may come in contact with the proper position of the tapered portion 80 of the flat head 78a, the main guide shaft 66 is rotated about the first supporting means 71 in the plane direction of the chassis 37 against the spring force of the coil spring 37 with the result that the attitude (inclination) of the main guide shaft 66 can be changed.

According to this embodiment, since one end of the axial direction of the main guide shaft 66 is supported by the first supporting means 71 and only the other end thereof is supported by the second supporting means 72, the attitude of the main guide shaft 66 is changed by using only one end of the main guide shaft 66 to thereby cancel the R dependence. However, the present invention is not limited to the above-described embodiment and such a variant is also possible, in which both ends of the axial direction of the main guide shaft 66 can be supported by the second supporting means 72, respectively. In such a case, the attitude of the main guide shaft 66 can be adjusted at both ends of the axial direction of the main guide shaft 66, whereby the attitude of the main guide shaft 66 can be fine adjusted, thereby resulting in adjustment with higher accuracy being carried out (that is, R dependence can be canceled or decreased to nearly zero).

It is needless to say that both of the above-described two guide members may be formed of round rods independently of the chassis 37 similarly to the main guide shaft 66. In this case, one ends of the two guide shafts may be supported by the second supporting means 72 and the other ends may be supported by the first supporting means 71. Alternatively, both ends of the two guide shafts may be supported by the second supporting means 72. However, if one end of at least the main guide shaft 66 of the two guide shafts is supported by the second supporting means 72, then this arrangement can satisfy the conditions of the arrangement of the present invention.

Also, it is needless to say that not only engineering plastic but also stainless steel, aluminum alloy and other metal materials can be used as the material of the chassis 37. Further, the shape of the chassis 37 is not limited to the casing described in the above-described embodiment and it is needless to say that the chassis 37 can be constructed by a flat plate member.

FIGS. 18A to 18C show a second inventive example of a second supporting means 82. In this second supporting means 82, an adjustment screw 83 is composed of a screw or bolt, which is generally available, and a ring attached to the shaft portion of the above screw or bolt. In the second inventive example, only the adjustment screw 82 will be explained and other elements and parts need not be described.

As shown in FIGS. 18A to 18C, the adjustment screw 83 is composed of a fixed screw 84 and a ring 85 having an inverse cone-like tapered portion 80. An oval screw, a flat head screw, a pan-head screw, a hexagon bolt, a hexagon socket head cap screw having a general head in which a lower surface of a head 84a is developed in the direction perpendicular or substantially perpendicular to the axial line and the like can be used as the fixed screw 84. The ring 85 is formed of a circular ring-like member whose upper surface is formed as a flat surface and in which the inverse cone-like tapered portion 80 is formed on the lower portion. The ring 85 has at its central portion bored a through-hole 86 into which a shaft portion 84b of the fixed screw 84 is fitted loosely.

In this inventive example, the main guide shaft 66 biased under spring force of the coil spring 77 is brought in contact with the adjustment screw 83 by any of the following states in response to the height position at which the ring 85 is placed by fastening the fixed screw 84. One of the following states is (1) in which the main guide shaft 66 is urged against the common portion extending from the shaft portion 84b of the fixed screw 84 to the tapered portion 80 of the ring 85 as shown in FIG. 18A and the other of the following states is (2) in which the main guide shaft 66 is urged against the tapered portion 80 of the ring 85 as shown in FIGS. 18B and 18C.

As described above, a feed screw shaft 88 of the optical pickup moving means 51 is located near the outside of the main guide shaft 66 of which attitude required when it is attached to the chassis 37 can be adjusted. The feed screw shaft 88 is set to become parallel or substantially parallel to the main guide shaft 66. As shown in FIGS. 9 to 12, this feed screw shaft 88 is constructed as a rotary shaft of a sled motor 89 and both end portions of the axial direction of the feed screw shaft 88 are rotatably supported by a supporting plate 90. The supporting plate 90 is fastened to and fixed to the lower surface of the chassis 38 by attachment screws 91a as shown in FIGS. 4 and 6.

A rack 93 fixed to the slide member 64 is meshed with the feed screw shaft 88 of the optical pickup moving means 51. The rack 93 has a tooth portion that may be fitted into threads of the feed screw shaft 88 such that the tooth portion can be moved relatively. The tooth portion of the rack 93 is constantly biased to the side of the feed screw shaft 88 under spring force of a rack pressing spring 94. The rack pressing spring 94 is composed of a pressing portion 94a which contacts with the back of the rack 93 to urge the rack 93 against the feed screw shaft 88 with elasticity and a fixed portion 94b joined to this pressing portion 94a as one body with the rack pressing spring 94. The rack pressing spring 94 is fastened to and fixed to the slide member 64 by screwing the fixed portion 94b with the attachment screws 91a.

Accordingly, as the sled motor 89 is driven to rotate the feed screw shaft 88, the optical pickup device 50 can be selectively moved in the direction in which it comes close to the table rotating means 35 (turntable 57, etc.) or in the direction in which it comes away from the table rotating means 35 in response to the rotation direction of the feed screw shaft 88. These chassis 37, table rotating means 35, optical pickup device 50 and optical pickup moving means 51 and other related mechanisms constitute the disc drive apparatus 3.

When the disc drive apparatus 3 having the above-mentioned arrangement is attached to the predetermined position within the outer case 5, as shown in FIG. 16, the turntable 57 of the table rotating means 35 is located at substantially the central portion of the disc compartment portion 6. This disc compartment portion 6 may be opened and closed by the disc lid 7 and the lid opening and closing mechanism can lock the disc lid 7 to the closed position and it can release the disc lid 7 from the locked state.

The lid opening and closing mechanism includes a lock member 95 fixed to the disc lid 7 and a switch provided within the outer case 5 although only the arrangement of a part of the lid opening and closing mechanism is illustrate. When the lock member 95 is locked by the switch, the disc lid 7 is held at the closed position. The disc lid 7 is opened when the locked state is released by the switch.

According to the disc type camera apparatus 1 including the disc drive apparatus 3 having the aforementioned arrangement, when the cameraman take a picture of an object similarly to a general camera apparatus, a digital signal corresponding to the image of the object can be generated so that such image can be displayed on a display apparatus such as a liquid-crystal display or that an information signal corresponding to such image can be recorded on a built-in storage apparatus or an external storage apparatus and the like.

In this case, when a positional relationship between the rotary shaft of the spindle motor 56 of the table rotating means 35 and the main guide shaft 66 of the optical pickup moving means 51 is not set to a value which falls within previously-determined proper values, the R dependence occurs to deteriorate efficiency at which suitable signals such as a tracking signal and a focusing signal can be read. Therefore, in such a case, it is necessary to correct the R dependence by adjusting the attitude (angle of inclination) of the main guide shaft 66 such that the R dependence may be canceled or decreased to a value close to zero.

FIG. 19A shows the state in which the movement locus PL of the optical pickup 100 of the optical pickup device 50 is displaced from the disc central line CL by a displacement amount E. In FIGS. 19A to 19D, reference numeral 100A denotes the state in which the optical pickup 100 is located at the innermost periphery of the information recording area, and reference numeral 100B denotes the state in which the optical pickup 100 is located at the outermost periphery of the information recording area. Also, reference numeral 111 denotes a main beam spot of three beam spots of beams emitted from the optical pickup 100, reference numeral 112 denotes a side beam spot of the front side of the track running direction and reference numeral 113 denotes a side beam spot of the rear side of the track running direction, respectively.

When the movement locus PL of the optical pickup 100 is set to the state shown in FIG. 19A, the movement locus PL is adjusted so as to be placed in the state shown in FIG. 19B, 19C or 19D by rotating the adjustment screw 78 (83) of the second supporting means 72. In the illustrated examples, the second supporting means 72 were respectively provided at both sides of the axial direction of the main guide shaft 66 so that the attitudes of the main guide shaft 66 could be adjusted at respective end portions separately.

FIG. 19B shows the case in which the main guide shaft 66 is adjusted by using the front side second supporting means 72 located close to the table rotating means 35 so that the extended line of the movement locus PL may pass the rotation center DC of the turntable 57. In this case, the attitude of the main guide shaft 66 is adjusted by turning or loosening the adjustment screw 78 of the front side second supporting means 72 so that the extended line of the movement locus PL of the optical pickup 100 may coincide with a line which results from connecting the rotation center DC of the turntable 57 and the rear side supporting means 72 of the main guide shaft 66.

Let it now be assumed that the front side second supporting means 72 is placed in the state shown in FIG. 17B. Then, when the adjustment screw 78 is turned, the countersunk head 78a of the adjustment screw 78 is lowered to elevate the contact portion of the adjustment screw 78 with the outer peripheral surface of the main guide shaft 66. As a consequence, as shown in FIG. 17C, the main guide shaft 66 is pushed to the outside (right-hand side in FIG. 17B) by the inclined plane of the tapered portion 80 against the spring force of the coil spring 77 so that the attitude (inclination or angle of inclination) of the main guide shaft 66 is changed. Also, when the adjustment screw 78 is loosened from the state shown in FIG. 17B, the countersunk head 78a of the adjustment screw 78 is elevated to lower the contact portion of the adjustment screw 78 with the outer peripheral surface of the main guide shaft 66. As a consequence, as shown in FIG. 17A, the main guide shaft 66 is pushed by the spring force of the coil spring 77 and entered into the inside (left-hand side in FIG. 17B) along the inclined plane of the tapered portion 80 so that the attitude of the main guide shaft 66 is changed similarly.

As described above, it is possible to cancel the R dependence or decrease the R dependence to a value close to zero by changing the attitude (inclination or angle of inclination) of the main guide shaft 66. In addition, according to the method for adjusting the attitude of the main guide shaft 66 by using the front side second supporting means 72, since it is sufficient that the adjustment amount of the main guide shaft 66 may be the minimum as compared with the following cases shown in FIGS. 19C and 19D, adjustment work can be carried efficiently. With respect to the adjustment screw 78 and the coil spring 77, it is fundamentally possible that either the adjustment screw 78 or the coil spring 77 may be located on the desired side surface of the two side surface of the main guide shaft 66. However, having considered that a space of a certain size should be required to apply constant spring force to the elastic member, it is effective from a space standpoint that the adjustment screw 78 should be located on the inside of the main guide shaft 66.

FIG. 19C shows the case in which the attitude of the main guide shaft 66 is adjusted by using the rear side second supporting means 72 located distant from the table rotating means 35. Although the adjustment method of this case is similar to that of FIG. 19B, in order to adjust the attitude of the main guide shaft 66 such that the extended line of the movement locus PL of the optical pickup 100 may coincide with the line which results from connecting the rotation center DC of the turntable 57 and the front side supporting means 72 of the main guide shaft 66, it is necessary to provide a sufficiently large movement amount of the main guide shaft 66 as shown in FIG. 19C. For this reason, although the attitude of the main guide shaft 66 can be adjusted by using the rear side second supporting means 72, since the adjustment amount is increased and hence adjustment efficiency is inferior to that obtained when the attitude of the main guide shaft 66 is adjusted by using the front side second supporting means 72.

FIG. 19D shows the case in which the attitude of the main guide shaft 66 is adjusted by using both of the front side second supporting means 72 and the rear side second supporting means 72. The adjustment method of this case is similar to that of FIG. 19B and with the adjustment of both of the front side second supporting means 72 and the rear side second supporting means 72, the attitude (inclination or angle of inclination) of the main guide shaft 66 can be changed to cancel the R dependence or to decrease the R dependence to a value close to zero similarly as described above. In addition, when both of the front side and rear side second supporting means 72 are adjusted, it becomes possible to fine adjust the attitude of the main guide shaft 66 and hence adjustment work with higher accuracy can be carried out.

FIG. 20A shows the state in which the movement locus PL of the optical pickup 100 crosses the disc central line CL with an inclination of the beam displacement angle θb. In FIGS. 20A to 20D, elements and parts identical to those of FIGS. 19A to 19D are denoted by identical reference numerals and therefore need not be described. Also in the case in which the movement locus PL of the optical pickup 100 is set to the state shown in FIG. 20A, the movement locus PL of the optical pickup 100 is adjusted so as to be placed in the state shown in FIG. 20B, 20C or 20D by turning the adjustment screw 78 (83) of the second supporting means 72.

FIG. 20B shows the case in which the attitude of the main guide shaft 66 is adjusted by using the front side second supporting means 72 located on the side close to the table rotating means 35. In this case, the attitude of the main guide shaft 66 is adjusted by turning or loosening the adjustment screw 78 (83) of the front side second supporting means 72 in such a manner that the extended line of the movement locus PL of the optical pickup 100 may coincide with the line which connects the rotation center DC of the turntable 57 and the rear side supporting portion of the main guide shaft 66. As described above, it is possible to cancel the R dependence or to decrease the R dependence to the value close to zero by turning the adjustment screw 78 to change the attitude (inclination or angle of inclination).

FIG. 20C shows the case in which the attitude of the main guide shaft 66 is adjusted by the rear side second supporting means 72 located on the side distant from the table rotating means 35. Although the adjustment method of this case is similar to that of the case shown in FIG. 20B, in order to adjust the attitude of the main guide shaft 66 in such a manner that the extended line of the movement locus PL of the optical pickup 100 may coincide with the line which connects the rotation center DC of the turntable 57 and the front side supporting portion of the main guide shaft 66, as shown in FIG. 20C, since it is necessary to provide a sufficiently large movement amount of the main guide shaft 66, it is unavoidable that the adjustment amount of the main guide shaft 66 is increased and hence adjustment efficiency is deteriorated as compared with the case in which the attitude of the main guide shaft 66 is adjusted by using the front side second supporting means 72.

FIG. 20D shows the case in which the attitude of the main guide shaft 66 is adjusted by using both of the front side second supporting means 72 and the rear side second supporting means 72. The adjustment method of this case is similar to that of the case shown in FIG. 20B and it is possible to cancel the R dependence or to decrease the R dependence to a value close to zero by adjusting the front side second supporting means 72 and the rear side second supporting means 72 to change the attitude (inclination or angle of inclination) of the main guide shaft 66 similarly as described above. In addition, since there are two places to be adjusted, very fine adjustment becomes possible and hence adjustment work can be carried out with higher accuracy.

FIG. 21A shows the case in which the movement locus PL of the optical pickup 100 crosses the disc central line CL with an inclination on the opposite side of FIG. 20A to generate the beam displacement angle θb. In FIGS. 21A to 21D, elements and parts identical to those of FIGS. 19A to 19D are denoted by identical reference numerals and therefore need not be described. Also in this case, the attitude of the main guide shaft 66 is adjusted by turning the adjustment screw 78 (83) of the second supporting means 72 in such a manner that the movement locus PL of the optical pickup 100 may become as shown in FIG. 21B, 21C or 21D.

FIG. 21B shows the case in which the attitude of the main guide shaft 66 is adjusted by using the front side second supporting means 72 located on the side close to the table rotating means 35. In this case, the attitude of the main guide shaft 66 is adjusted by turning or loosening the adjustment screw 78 (83) of the front side second supporting means 72 such that the extended line of the movement locus PL of the optical pickup 100 may coincide with the line which connects the rotation center DC of the turntable 57 and the rear side supporting portion of the main guide shaft 66. As described above, it is possible to cancel the R dependence or to decrease the R dependence to a value close to zero by turning the adjustment screw 78 to change the attitude (inclination or angle of inclination) of the main guide shaft 66.

FIG. 21C shows the case in which the attitude of the main guide shaft 66 is adjusted by using the rear side second supporting means 72 located on the side distant from the table rotating means 35. Although the adjustment method of this case is similar to that of the case shown in FIG. 20B, in order to adjust the attitude of the main guide shaft 66 in such a manner that the extended line of the movement locus PL of the optical pickup 100 may coincide with the line which connects the rotation center DC of the turntable 57 and the front side supporting portion of the main guide shaft 66, as shown in FIG. 21C, since it is necessary to provide a sufficiently large movement amount of the main guide shaft 66, it is unavoidable that the adjustment amount of the main guide shaft 66 is increased and hence adjustment efficiency is deteriorated as compared with the case in which the attitude of the main guide shaft 66 is adjusted by using the front side second supporting means 72.

FIG. 21D shows the case in which the attitude of the main guide shaft 66 is adjusted by using both of the front side second supporting means 72 and the rear side second supporting means 72. The adjustment method of this case is similar to that of the case shown in FIG. 21B and it is possible to cancel the R dependence or to decrease the R dependence to a value close to zero by adjusting the front side second supporting means 72 and the rear side second supporting means 72 to change the attitude (inclination or angle of inclination) of the main guide shaft 66 similarly as described above. In addition, since there are two places to be adjusted, very fine adjustment becomes possible and hence adjustment work can be carried out with higher accuracy.

As described above, according to the embodiments of the present invention, since the attitude (inclination or angle of inclination) of the guide shaft can be adjusted based on the degree in which the adjustment screw is turned, the optical pickup is able to trace the disc central line of the disc-like recording medium regardless of accuracy of assemblies such as the chassis and the spindle motor and accuracy with which those assemblies are attached. Therefore, the tracking signal can be detected with higher accuracy, deterioration of tracking efficiency can be suppressed to the minimum, this kind of apparatus can be improved in performance and the assemblies such as the chassis and the spindle motor can be manufactured inexpensively.

The present invention is not limited to the aforementioned and illustrated embodiments and can be variously changed modified without departing from the gist thereof. For example, while an embodiment of the present invention is applied to the disc type camera apparatus using the DVD-R as the recording medium as described above, the present invention is not limited thereto and can also be applied to camera apparatus using other recording system disc-like recording mediums such as a magneto-optical disc and a magnetic disc. Further, the electronic device according to embodiments of the present invention is not limited to the aforementioned camera apparatus and can also be applied to personal computers, electronic dictionaries, DVD players, car navigation systems using this kind of disc drive apparatus and various kinds of electronic devices.

According to the disc drive apparatus of an embodiment of the present invention, the disc-like recording medium mounted on the turntable is rotated by the table rotating means and the optical pickup device is moved in the radius direction of the disc-like recording medium by the optical pickup moving means. When the optical pickup device is being moved in the radius direction of the disc-like recording medium by the optical pickup moving means, the information signal is recorded on or reproduced from the disc-like recording medium by the optical pickup device. At that time, if the optical pickup which traces the information recording surface of the disc-like recording medium is displaced from the disc central line, then tracking efficiency will be deteriorated and hence the optical pickup should be adjusted so as to remove such displacement. In this case, the height of the head is changed by turning the adjustment screw of the supporting means which supports at least one guide member of the two guide members to the chassis or the chassis side member, whereby the axial direction (attachment attitude) of one guide member spring-biased with the elastic member is changed to remove the R dependence.

As a result, since the optical pickup device can be adjusted such that the optical pickup may trace the disc central line regardless of attachment accuracy of the chassis, the spindle motor and the like, deterioration of tracking efficiency can be suppressed to the minimum and performance of the disc drive apparatus can be improved for recording and reproduction. Also, the adjustment screw of the main guide shaft which is one guide member serves as a member for fixing the main guide shaft to the chassis as well. In consequence, work of two steps of the rotation adjustment work done by the adjustment jig in the adjustment work of the R dependence, which has been enumerated as the problem encountered with the related art, and the fixing work using the fixed screws can be replaced with work of one step and hence adjustment and fixing can be completed. Thus, it becomes possible to decrease the number of manufacturing processes and the number of assemblies.

According to the disc drive apparatus of embodiments of the present invention, since screw assemblies generally available on the market, such as small countersink screws and flat head bolts of flat fillister head screws and oval countersunk screws can be used as adjustment screws and screws of special shapes and structures need not be manufactured, a manufacturing cost of the disc drive apparatus can be prevented from being increased and hence it is possible to realize the supporting means, which can change the axial direction of the guide member, by an extremely simple arrangement.

According to the disc drive apparatus of embodiments of the present invention, since the adjustment screw can be constructed by the simple arrangement of the screw, which is widely used, and the tapered ring, it is possible to realize the supporting means, which can change the axial direction of the guide member, by the simple arrangement without increasing the manufacturing cost so much.

According to the disc drive apparatus of embodiments of the present invention, since the coil spring, the leaf spring, the volute spring or the rubber-like elastic material, which are widely used, can be used as the elastic member and accordingly any special elastic member need not be used, it is possible to inexpensively manufacture the supporting means, which can change the axial direction of the guide member, by the simple arrangement without increasing the manufacturing cost so much.

Further, according to the disc drive apparatus of an embodiment of the present invention, since one guide member is supported by the supporting means such that both ends thereof in the longitudinal direction may be adjusted, the guide member can be adjusted at its both ends of the axial direction and it is possible to realize the supporting means of which angle can be fine adjusted by the simple arrangement.

Furthermore, according to the electronic device of an embodiment of the present invention, the axial direction of at least one guide member of the two guide members supported to the chassis or the chassis side member of the disc drive apparatus by the supporting means can be varied by turning the adjustment screw of the supporting means to change the height of the head of the adjustment screw, whereby the axial direction of the guide member spring-biased by the elastic member can be changed to remove the R dependence. As a result, it is possible to provide the electronic device in which adjustment work by which the optical pickup can trace the disc central line can be carried out with ease regardless of positional accuracy of suitable components such as the chassis and the spindle motor, deterioration of tracking efficiency can be suppressed to the minimum and which can be improved in performance for recording and reproduction.

The present invention contains subject matter related to Japanese Patent Application JP 2004-358492 filed in the Japanese Patent Office on December 10, 2004, the entire contents of which being incorporated herein by reference.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

**Claims**

1. A disc drive apparatus comprising:

    table rotating means for rotating a turntable on which a disc-like recording medium is detachably mounted;
    a chassis to which said table rotating means is attached;
    an optical pickup device for recording and/or reproducing an information signal on and/or from said disc-like recording medium rotated by said table rotating means;
    optical pickup moving means including two guide members for guiding said optical pickup device in the radius direction of said disc-like recording medium and moving said optical pickup device along said two guide members; and
    supporting means for supporting at least one guide member of said two guide members to said chassis or a chassis side member, wherein said supporting means includes an elastic member for spring-biasing said one guide member at least at one end of the longitudinal direction of said one guide member in the direction crossing its shaft direction and an adjustment screw located so as to oppose said elastic member so that it may be screwed to said chassis or said chassis side member and said adjustment screw having a tapered portion contacting with an outer peripheral surface of said one guide member so as to stop movement of said one guide member spring-biased by said elastic member.

2. A disc drive apparatus according to claim 1, wherein said adjustment screw is a countersunk small screw or a flat head bolt with a head having an inverse conical tapered portion.

3. A disc drive apparatus according to claim 1, wherein said adjustment screw is a screw or a bolt in which a ring having an inverse conical tapered portion is attached to a shaft portion.

4. A disc drive apparatus according to claim 1, wherein said elastic member is formed of a coil spring, a leaf spring, a volute spring or a rubber-like elastic material of which one end is supported to said chassis or said chassis side member.

5. A disc drive apparatus according to claim 1, wherein said supporting means is provided at said one guide member at its respective ends in the longitudinal direction.

6. An electronic device including a disc drive apparatus for rotating a disc-like recording medium and recording and/or reproducing an information signal on and/or from said disc-like recording medium, said disc drive apparatus comprising:

    table rotating means for rotating a turntable on which a disc-like recording medium is detachably mounted;
    a chassis to which said table rotating means is attached;
    an optical pickup device for recording and/or reproducing an information signal on and/or from said disc-like recording medium rotated by said table rotating means;
    optical pickup moving means including two guide members for guiding said optical pickup device in the radius direction of said disc-like recording medium and moving said optical pickup device along said two guide members; and

supporting means for supporting at least one guide member of said two guide members to said chassis or a chassis side member, wherein said supporting means includes an elastic member for spring-biasing said one guide member at least at one end of the longitudinal direction of said one guide member in the direction crossing its shaft direction and an adjustment screw located so as to oppose said elastic member so that it may be screwed to said chassis or said chassis side member and said adjustment screw having a tapered portion contacting with an outer peripheral surface of said one guide member so as to stop movement of said one guide member spring-biased by said elastic member.

7. An electronic device according to claim 6, wherein said adjustment screw is a countersunk small screw or a flat head bolt with a head having an inverse conical tapered portion.

8. An electronic device according to claim 6, wherein said adjustment screw is a screw or a bolt in which a ring having an inverse conical tapered portion is attached to a shaft portion.

9. An electronic device according to claim 6, wherein said elastic member is formed of a coil spring, a leaf spring, a volute spring or a rubber-like elastic material of which one end is supported to said chassis or said chassis side member.

10. An electronic device according to claim 6, wherein said supporting means is provided at said one guide member at its respective ends in the longitudinal direction.

## FIG. 1A
## (RELATED ART)

## FIG. 1B
## (RELATED ART)

## FIG. 2A
## (RELATED ART)

## FIG. 2B
## (RELATED ART)

# FIG. 3

# FIG. 4

# FIG. 5

# FIG. 6

# FIG. 7

# FIG. 8

# FIG. 9

## FIG. 10

## FIG. 11

## FIG. 12

## FIG. 13

FIG. 14

EP 1 672 624 A2

# FIG. 15

FIG. 16

EP 1 672 624 A2

**FIG. 17A**

**FIG. 17B**

**FIG. 17C**

FIG. 18A

FIG. 18B

FIG. 18C

# FIG. 19A

Before Adjusted

# FIG. 19B

Only Inner Peripheral Side Adjusted

# FIG. 19C

Only Outer Peripheral Side Adjusted

# FIG. 19D

Inner & Outer Peripheral Sides Adjusted

# FIG. 20A

Before Adjusted

# FIG. 20B

Only Inner Peripheral Side Adjusted

# FIG. 20C

Only Outer Peripheral Side Adjusted

# FIG. 20D

Inner & Outer Peripheral Sides Adjusted

# FIG. 21A

Before Adjusted

# FIG. 21B

Only Inner Peripheral Side Adjusted

# FIG. 21C

Only Outer Peripheral Side Adjusted

# FIG. 21D

Inner & Outer Peripheral Sides Adjusted